# EUROPÄISCHE PATENTANMELDUNG

(11) **EP 1 172 183 A2**
(43) Veröffentlichungstag der Anmeldung: **16.01.2002**
(21) Anmeldenummer: 01117102.2
(22) Anmeldetag: 13.07.2001
(51) Int. Cl.: B25J 9/16, G05B 19/408

(54) **Vorrichtung und Anordnung zur Ermittlung von korrigierten Bewegungsdaten für einen vorgegebenen Bewegungsablauf einer bewegbaren Einrichtung sowie bewegbare Einrichtung und System aus bewegbaren Einrichtungen**

(30) Priorität: 13.07.2000 DE 10034189
(71) Anmelder: Kleck, Rolf, 88213 Ravensburg (DE)
(72) Erfinder: Kleck, Rolf, 88213 Ravensburg (DE)
(74) Vertreter: Patentanwälte Eisele, Otten, Roth & Dobler

(57) **Zusammenfassung**

Es wird eine Vorrichtung zur Ermittlung von korrigierten Bewegungsdaten für einen Bewegungsablauf einer bewegbaren Einrichtung (5) nach einer von der Steuerung der bewegbaren Einrichtung (5) nicht ausreichend erfassten Bewegung der bewegbaren Einrichtung (5) vorgeschlagen. Der Erfindung liegt die Aufgabe zugrunde, die Ermittlung von korrigierten Bewegungsdaten für einen Bewegungsablauf einer bewegbaren Einrichtung vergleichsweise genauer und kostengünstiger vornehmen zu können. Zur Lösung der Aufgabe umfasst die Vorrichtung eine Bilderfassungseinheit (11) und eine Rechnereinheit, wobei die Rechnereinheit nach einer von der Steuerung der bewegbaren Einrichtung nicht oder nicht ausreichend erfassten Bewegung korrigierte Bewegungsdaten mit Hilfe von Bezugsmitteln (9) bestimmt, die wenigstens in einem vorgegebenen Raumwinkelbereich eindeutig zuordenbare Bildansichten aufweisen, indem die Rechnereinheit aus Daten von einem durch die Bilderfassungseinheit (11) aufgenommenen Ist-Bild der Bezugsmittel (9) nach der nicht oder unzureichend erfassten Bewegung und Daten eines Bezugsbildes der Bezugsmittel (9), bei dem die bewegbare Einrichtung eine eingelernte Bewegung entsprechend von in der Rechnereinheit abgelegten Urbewegungsdaten ausführen würde, eine Transformationsvorschrift zur Korrektur der Urbewegungsdaten errechnet. Des Weiteren wird eine Anordnung zur Ermittlung von korrigierten Bewegungsdaten für einen Bewegungsablauf einer bewegbaren Einrichtung mit Bezugsmittel (9) sowie ein System aus mehreren bewegbaren Einrichtungen vorgeschlagen.

## Beschreibung

Die Erfindung betrifft eine Vorrichtung zur Ermittlung von korrigierten Bewegungsdaten für einen vorgegebenen Bewegungsablauf einer bewegbaren Einrichtung, z. B. eines verfahrbaren Roboters, eines Linearachsensystems usw., nach einer von einer Steuerung der bewegbaren Einrichtung nicht oder nicht ausreichend erfassten Bewegung der bewegbaren Einrichtung, eine Anordnung, die eine solche Vorrichtung umfasst sowie eine bewegbare Einrichtung nach dem Oberbegriff des Anspruchs 1 und ein System aus mehreren bewegbaren Einrichtungen.

### Stand der Technik

Die deutsche Patentschrift DE 32 46 828 C2 offenbart eine mobile Transport- und Handhabungseinrichtung, die aus einem automatisch steuerbaren, liniengebundenen und im Bereich von Haltestationen grob positionierbaren Flurförderfahrzeug sowie einem mit dem Flurförderfahrzeug fest verbundenen Industrieroboter besteht, der durch einen Rechner gesteuert wird. Im Weiteren ist eine Messanordnung vorgesehen, deren Komponenten zum Teil an der Einrichtung und zum Teil ortsfest im Bereich der Haltestationen angebracht sind und durch welche nach der Positionierung der Einrichtung an der Halteposition die Abweichung der Ist-Position des Flurförderfahrzeugs von der Soll-Position ermittelbar ist. Mittels des Rechners erfolgt eine der Abweichung des Ist-Wertes vom Soll-Wert entsprechende Transformation der Handhabungskoordinaten in der Robotersteuerung.

Für die Ausgestaltung der Messanordnung sind eine Reihe von Ausführungsvarianten in der DE 32 46 828 C2 beschrieben. Beispielsweise weist die Messanordnung einen Taster mit einem Taststift auf, der am Greifer des Roboters angebracht und von diesem automatisch an ortsfeste Referenzpunkte oder Flächen heranführbar ist. Durch das Antasten dieser Punkte oder der Flächen kann die Ist-Position der Einrichtung ermittelt werden. Des Weiteren wird als Messanordnung ein Lichtsender, der einen gebündelten Lichtstrahl schräg auf eine reflektierende Messfläche sendet sowie ein Lichtempfänger zur Aufnahme des reflektierten Strahls vorgeschlagen, wobei aus dem Auftreffpunkt des Strahls im Empfänger die Ist-Entfernung ermittelbar ist.

Die vollständig mechanische Bestimmung der Ist-Position mittels des Greifers hat den Nachteil, dass die Position nur so genau bestimmt werden kann, wie es die Wiederholgenauigkeit der Mechanik zulässt.

Die optische Bestimmung der Ist-Position durch einen Lichtsender ist insofern nachteilig, als dass für eine dreidimensionale Erfassung der Position drei Messungen mit jeweils unterschiedlich positioniertem Sender notwendig sind, worunter wiederum die Genauigkeit der Positionserfassung aufgrund einer begrenzten mechanischen Wiederholgenauigkeit leidet.

### Aufgabe und Vorteile der Erfindung

Der Erfindung liegt die Aufgabe zugrunde, die Ermittlung von korrigierten Bewegungsdaten für einen Bewegungsablauf einer bewegbaren Einrichtung vergleichsweise genauer und kostengünstiger vornehmen zu können.

Diese Aufgabe wird durch die Merkmale des Anspruchs 1, 6, 10 und 13 gelöst.

In den Unteransprüchen sind vorteilhafte und zweckmäßige Weiterbildungen der Erfindung angegeben.

Die Erfindung geht zunächst von einer Vorrichtung zur Ermittlung von korrigierten Bewegungsdaten für einen vorgegebenen Bewegungsablauf einer bewegbaren Einrichtung, z.B. Elementen eines verfahrbaren Roboters oder eines Systems, bestehend aus mehreren Linearachsen, nach einer von der Steuerung der bewegbaren Einrichtung nicht oder nicht ausreichend erfassten Bewegung der bewegbaren Einrichtung aus. Der Kerngedanke der Erfindung liegt nun darin, dass eine Bilderfassungseinheit und eine Rechnereinheit vorgesehen sind und die Rechnereinheit nach einer von der Steuerung der bewegbaren Einrichtung nicht oder nicht ausreichend erfassten Bewegung die korrigierten Bewegungsdaten mit Hilfe von Bezugsmitteln bestimmt, die wenigstens in einem vorgegebenen Raumwinkelbereich eindeutig zuordenbare Bildansichten aufweisen, indem die Rechnereinheit aus Daten von einem durch die Bilderfassungseinheit aufgenommenen Ist-Bild der Bezugsmittel im positionierten Zustand der bewegbaren Einrichtung nach der nicht oder unzureichend erfassten Bewegung und Daten eines Bezugsbildes der Bezugsmittel, bei dem die bewegbare Einrichtung eine gewünschte Bewegung entsprechend von in der Rechnereinheit abgelegten Urbewegungsdaten ausführen würde, eine Transformationsvorschrift zur Korrektur der Urbewegungsdaten errechnet. Durch diese Vorgehensweise ist es möglich, durch eine einzige Bildaufnahme, die nicht oder nicht ausreichend erfasste räumliche Positionsänderung einer bewegbaren Einrichtung an einer Messstelle exakt zu bestimmen. Für diese Messstelle, die einer grob angefahrenen Position entspricht, sind die diesbezüglich ermittelten Korrekturdaten für alle Urbewegungsdaten maßgeblich. D.h., die bewegbare Einrichtung kann an der Messstelle mit Urbewegungsdaten gewünschte Bewegungen durchführen, die lediglich einmal mit einer Transformationsvorschrift korrigiert werden müssen. Die in der DE 32 46 828 beschriebene optische Methode bedarf der Vermessung von mindestens drei verschiedenen Messstellen, wodurch das Messergebnis von der Wiederholgenauigkeit des mechanischen Systems zum Anfahren dieser Messstellen nachteilig beeinflusst wird. Die erfindungsgemäßen Maßnahmen haben darüber hinaus den weiteren Vorteil, dass sie sich in einer vergleichsweise deutlich kompakteren Bauform realisieren lassen. Des Weiteren ermöglicht diese Art der Bewegungsdatenkorrektur mittels einer Bilderfassungseinheit den Einsatz derselben Bilderfassungseinheit und derselben Rechnereinheit zur Objekterkennung, wenn die Vorrichtung beispielsweise an einem Roboter angeordnet ist, der z. B. vorgegebene Objekte greifen oder bearbeiten soll.

Wird die erfindungsgemäße Vorrichtung zur Bestimmung der räumlichen Position beispielsweise an einem verfahrbaren Roboter mit einem fahrerlosen Transportfahrzeug und einem am Transportfahrzeug angebrachten Manipulator angeordnet, kann dieser Roboter nach einer Grobpositionierung, z. B. über ein induktives Leitsystem, eingelernte Bewegungsabläufe mit korrigierten Bewegungsdaten an der grob positionierten Stelle (Messstelle) dennoch exakt durchführen und zugleich mit Hilfe der Bilderfassungseinheit, z. B. zu bearbeitende Werkstücke, identifizieren und gegebenenfalls in ihrer Lage erkennen. D.h., im Fall eines verfahrbaren Roboters mit Manipulator handelt es sich um eine bewegbare Einrichtung, nämlich den Manipulator, die selbst nochmals bewegbar bzw. verfahrbar ist, denn der Manipulator ist auf einem Transportfahrzeug montiert. Insbesondere in einer solchen Ausgestaltung ist die Erfindung vorteilhaft, da das Transportfahrzeug durch robuste, schnell arbeitende Positioniermittel, die vergleichsweise ungenau sein dürfen, an einen Einsatzort gebracht werden kann, wobei dann eine vergleichsweise hohe Genauigkeit der Bewegung des Manipulators durch die Anpassung der Urbewegungsdaten des Manipulators auf den Einsatzort über die erfindungsgemäße Korrektur erreicht wird. Das Transportfahrzeug bleibt dabei unverändert in der grob angefahrenen Einsatzposition (Messstelle). Um eine bestmögliche Korrektur der Bewegungsbahn eines am Manipulator angeordneten Werkzeugs ohne mechanische Einflüsse zu erhalten, wird vorgeschlagen, die Bilderfassungseinheit oder die Bezugsmittel direkt am Werkzeug zu positionieren.

Zur Realisierung eines vergleichsweise kostengünstigen Aufbaus kann die Bilderfassungseinheit eine Videokamera, insbesondere eine digitale Videokamera umfassen. Es kann jedoch auch eine analoge oder digitale Kamera eingesetzt werden.

Als Rechnereinheit kann ein handelsüblicher PC eingesetzt werden.

Insbesondere beim Einsatz einer digitalen Videokamera ist es bevorzugt, wenn die Rechnereinheit dazu ausgelegt ist, die Transformationsvorschrift zur Korrektur der Bewegungsdaten durch einen Pixelvergleich des Ist-Bildes mit dem Bezugsbild zu bestimmen. Mit Hilfe der Transformationsvorschrift kann dann z. B. ein Roboterarm, ausgehend von Ursprungsbewegungsdaten, auch nach einer von einer Steuerung des Roboters nicht erfassten Bewegung des Roboterarms anhand von korrigierten Bewegungsdaten dennoch in exakter Weise vorgegebene Bewegungsabläufe durchführen.

Vorzugsweise ist die Rechnereinheit zur Ermittlung einer Transformationsvorschrift in Form eines Verschiebungsvektors in einem dreidimensionalen Koordinatensystem sowie von Winkeldrehungen um die drei Koordinatenachsen ausgelegt, die das Koordinatensystem aufspannen. Durch den Verschiebungsvektor und jeweiligen Drehwinkel lässt sich die Bewegung einer bewegbaren Einrichtung im Raum in Bezug auf Ursprungsbewegungsdaten mit Größen korrigieren, die insbesondere im Zusammenhang mit einem Roboter, z. B. einem 6-Achs-Knickarmroboter, für dessen Ansteuerung leicht weiterverarbeitbar sind.

Die in einer Anordnung zur Ermittlung von korrigierten Bewegungsdaten für einen Bewegungsablauf einer bewegbaren Einrichtung nach einer von der Steuerung der bewegbaren Einrichtung nicht oder nicht ausreichend erfassten Bewegung notwendigen Bezugsmittel können z. B. ein dreidimensionales Objekt mit Orientierungselementen, z. B. Objektkanten oder zusätzlich angebrachte Markierungselementen, umfassen. Als Bezugsmittel ist außerdem das virtuelle Bild eines solchen dreidimensionalen Objekts möglich, insbesondere in Form eines Hologramms. Bei den Bezugsmitteln kommt es entscheidend darauf an, dass in einem vorgegebenen Raumwinkelbereich eindeutig zuordenbare Bildansichten von einer Bilderfassungseinheit aufgenommen werden können.

In einer bevorzugten Ausführungsform ist die Bilderfassungseinheit an der bewegbaren Einrichtung angeordnet, wogegen die Bezugsmittel getrennt von der bewegbaren Einrichtung positioniert sind.

Die Zuordnung von Bilderfassungseinheit und Bezugsmittel kann jedoch auch vertauscht werden. In diesem Fall sind an der bewegbaren Einrichtung die Bezugsmittel angebracht, wogegen die Bilderfassungseinheit getrennt von der bewegbaren Einheit angeordnet ist.

Für den Fall, dass die Bilderfassungseinheit getrennt von der bewegbaren Einrichtung positioniert ist, muss gewährleistet werden, dass die Bilddaten einen gegebenenfalls an der bewegbaren Einrichtung vorgesehenen Steuerrechner immer sicher erreichen.

In beiden Fällen können sowohl die Bilderfassungseinheit als auch die Bezugsmittel bewegbar an einer Aufnahme angeordnet werden. Dies setzt jedoch voraus, dass die Position bei einer räumlichen Positionsänderung der Bezugsmittel oder der Bilderfassungseinheit bei der Berechnung einer Transformationsvorschrift für Bewegungsdaten der bewegbaren Einrichtung mit berücksichtigt werden.

Bei der Anbringung der oben beschriebenen Vorrichtung zur Ermittlung von korrigierten Bewegungsdaten an einer bewegbaren Einrichtung, insbesondere an einem fahrbaren Roboter mit einem fahrerlosen Transportfahrzeug und einem am Transportfahrzeug angebrachten Manipulator kann das Bilderfassungssystem entweder am fahrerlosen Transportfahrzeug, am Manipulator oder an einem am Manipulator angeordneten Werkzeug angebracht werden. Die Anbringung der Bilderfassungseinheit am Manipulator ist dann vorteilhaft, wenn nur ein verfahrbarer Roboter eine oder mehrere Haltestationen zu bedienen hat. In diesem Fall kann die Bilderfassungseinheit auch am Transportfahrzeug selber angebracht werden, wobei sich der Manipulator dann nur im Rahmen seiner Wiederholgenauigkeit positionieren lässt.

Werden jedoch mehrere verfahrbare Roboter eingesetzt, die alle auf eine Reihe von Werkzeuge (z. B. Greifer oder Bearbeitungswerkzeuge) zugreifen sollen, ist es im Weiteren bevorzugt, wenn die Bilderfassungsmittel unmittelbar am Werkzeug, insbesondere als zusätzliche Bilderfassungsmittel angebracht sind. Durch diese Maßnahme wird die Genauigkeit von Arbeitsgängen nicht durch eine begrenzte Wiederholgenauigkeit des mechanischen Systems des Manipulators oder dadurch beeinträchtigt, dass das selbe Werkzeug an verschiedenen Robotern in gegebenenfalls leicht unterschiedlich ausgestalteten Aufnahmen angebracht ist.

An den Positionen, die soeben für die Bilderfassungseinheit vorgeschlagen wurden, können auch stattdessen die Bezugsmittel positioniert werden. In diesem Fall ist die Bilderfassungseinheit getrennt von der bewegbaren Einrichtung vorzugsweise ortsfest anzubringen.

Erfindungsgemäß kann auch ein System bewegbarer Einrichtungen, insbesondere verfahrbare Roboter, realisiert werden, bei welchem sich die bewegbaren Einrichtungen respektive die Roboter z. B. an einer Vielzahl von unterschiedlichen Bezugsmitteln orientieren oder über mehrere verteilt angeordnete Bilderfassungseinheiten gesteuert werden.
Der Einsatz der oben beschriebenen Vorrichtung zur Ermittlung von korrigierten Bewegungsdaten für einen Bewegungsablauf einer bewegbaren Einrichtung ist jedoch nicht notwendigerweise auf beispielhaft genannte verfahrbare Roboter beschränkt. Eine solche Vorrichtung kann auch zur Bewegungsdatenkorrektur von Linearachsen oder automatischen Schwerlastkränen zum Einsatz kommen. Hierdurch lassen sich beispielsweise Positioniertoleranzen, die durch die notwendige mechanische Elastizität solcher Einrichtungen an sich nicht vermeidbar sind, korrigieren.

### Zeichnungen

Ein Ausführungsbeispiel der Erfindung ist in den Zeichnungen dargestellt und unter Angabe weiterer Vorteile und Einzelheiten näher erläutert.

Es zeigen
- Figur 1: einen verfahrbaren Roboter an einer Haltestation mit einem Bezugskörper in einer schematischen räumlichen Darstellung und
- Figur 2: eine Teilansicht des Roboters mit Bezugskörper von schräg unten.

### Beschreibung des Ausführungsbeispiels

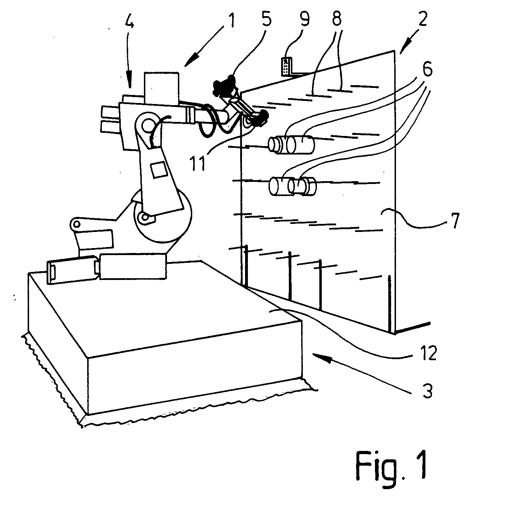

In Figur 1 ist ein verfahrbarer Roboter 1 vor einer Haltestation 2 dargestellt. Der verfahrbare Roboter umfasst ein fahrerloses Transportfahrzeug 3, auf dem ein 6-Achs-Knickarmmanipulater 4 angeordnet ist. Am vorderen Ende des Knickarmmanipulators 4 ist ein Werkzeug 5 angebracht, mit welchem Werkstücke 6 aufgenommen werden können, die an der Haltestation 2 auf an einer Wand 7 angebrachten Stangen 8 abnehmbar gelagert sind.

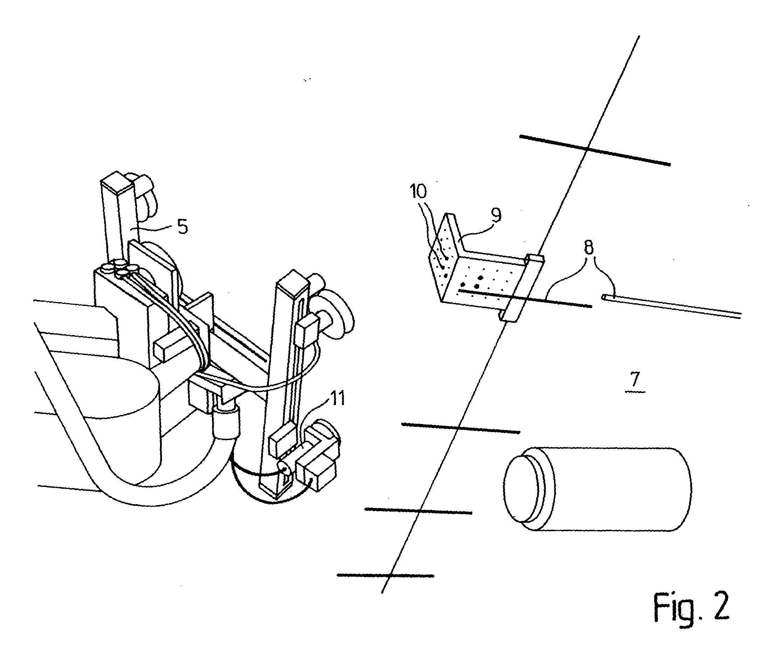

Am oberen Rand der Wand 7 ist ein winkelförmiger Bezugskörper 9 mit Markierungen 10 (vgl. hierzu Figur 2) positioniert. Am Werkzeug 5 ist eine Digitalkamera 11 montiert.

Das fahrerlose Transportfahrzeug 3 kann z. B. durch induktive Leiteinrichtungen (nicht dargestellt) grob vor der Haltestation 2 positioniert werden. An der Haltestation 2 wird über die digitale Kamera 11 ein Bild vom Bezugskörper 10 aufgenommen. In der nicht dargestellten Rechnereinheit wird aus den Daten des aufgenommenen Bildes des Bezugskörpers 10 und Daten eines Bezugsbildes der Bezugsmittel, bei dem das Werkzeug 5 eine eingelernte Bewegung entsprechend von in der Rechnereinheit abgelegten Urbewegungsdaten ausführen würde, eine Transformationsvorschrift zur Korrektur der Urbewegungsdaten errechnet. Bei der Anwendung dieser Transformationsvorschrift auf die Urbewegungsdaten erhält man korrigierte Bewegungsdaten, durch die dann ein eingelernter Bewegungsablauf ideal ausgeführt wird.

Durch die Markierungen 12 auf dem Bezugskörper 9 besitzt der Bezugskörper in einem bestimmten Raumwinkelbereich eindeutig zuordenbare Bildansichten. Dies erlaubt dem nicht dargestellten Rechner, aus dem aktuellen Bild des Bezugskörpers 9 nach einer groben Positionierung des verfahrbaren Roboters Daten zu gewinnen, die eindeutig zu Daten eines Bezugsbildes in Bezug gesetzt werden können, um hieraus die Transformationsvorschrift für die Urbewegungsdaten zu erhalten. Vorzugsweise wird zur Transformation ein Verschiebungsvektor in einem dreidimensionalen rechtwinkligen Koordinatensystem ermittelt sowie drei Winkeldrehungen um die Koordinatenachsen, welche das Koordinatensystem aufspannen.

Mit dieser Kenntnis kann das Werkzeug 5 in unterschiedlichen Positionen des fahrerlosen Transportfahrzeugs über den Manipulator 4 durch eine jeweils für eine Position des fahrerlosen Transportfahrzeugs neu zu errechnende Transformationsvorschrift die Werkstücke 6 an der Wand 7 anfahren, gegebenenfalls aufnehmen und falls gewünscht, auf einem vorbereiteten Transportbereich 12 neben dem Manipulator 4 am fahrerlosen Transportfahrzeug 3, z. B. auf einer nicht dargestellten Palette, ablegen. Dabei werden die Bewegungen, die das Werkzeug 5 am Manipulator 4 ausübt, immer durch den Verschiebungsvektor und die drei Winkeldrehungen korrigiert, womit sie letztendlich mit Bewegungen übereinstimmen, die in der Stellung, in welcher das Bezugsbild aufgenommen wurde, dem Roboter eingelernt worden sind.

Durch die Ermittlung einer Transformationsvorschrift im dreidimensionalen Raum durch lediglich die Aufnahme eines einzigen Bildes mittels eines optischen Erfassungssystems, das z. B. starr an einem Werkzeug oder Manipulator angebracht sein kann, ist der korrigierte Bewegungsablauf nicht durch mechanische Wiederholungenauigkeiten belastet, die dann auftreten, wenn beispielsweise entsprechend der DE 32 46 828 C2 der Manipulator zur Positionserfassung einen Taststift gegebenenfalls dreimal an Referenzpunkte bewegen muss oder ein optisches System drei Referenzpunkte anzufahren hat.

Die Genauigkeit des korrigierten Bewegungsablaufs durch die erfindungsgemäße Vorgehensweise kann noch weiter verbessert werden, indem während eines Bewegungsablaufs des Manipulators (z. B. während ein Bearbeitungswerkzeug über das Werkzeug 5 des Manipulators 4 an einer Bearbeitungsmaschine angebracht werden soll) die Bilderfassungseinheit 11 Aufnahmen vom Anbringungsort des Bearbeitungswerkzeugs macht, dessen Daten mit den Daten eines bekannten Bildes vergleicht, bei welchem die Bewegungsbahn zum Anbringungsort exakt bekannt ist und gegebenenfalls daraufhin vom Rechner nochmals eine Positionskorrektur vorgenommen wird, falls aus den Daten des aktuellen Bildes und den Daten des Bezugsbildes Abweichungen errechnet werden.

Durch den Einsatz einer Bilderfassungseinheit z. B. in Form einer digitalen Kamera ist das System auch in der Lage, eine Objekterkennung auszuführen, wodurch die erfindungsgemäße Korrigiervorrichtung einem zusätzlichen Verwendungszweck zugeführt wird. Normalerweise muss zur Bereitstellung einer Objekterkennung ein zusätzliches optisches System am Roboter vorgesehen werden, was die Anfälligkeit des Systems erhöht und letztendlich die Kosten in die Höhe treibt.

### Bezugszeichenliste:

- 1: verfahrbarer Roboter
- 2: Haltestation
- 3: fahrerloses Transportfahrzeug
- 4: Manipulator
- 5: Werkzeug
- 6: Werkstück
- 7: Wand
- 8: Stange
- 9: Bezugskörper
- 10: Markierung
- 11: Digitalkamera
- 12: Transportbereich

## Patentansprüche

1. Vorrichtung zur Ermittlung von korrigierten Bewegungsdaten für einen vorgegebenen Bewegungsablauf einer bewegbaren Einrichtung (5) nach einer von einer Steuerung der bewegbaren Einrichtung nicht oder nicht ausreichend erfassten Bewegung der bewegbaren Einrichtung (5), **dadurch gekennzeichnet, dass** eine Bilderfassungseinheit (11) und eine Rechnereinheit vorgesehen sind, und die Rechnereinheit nach der von der Steuerung der bewegbaren Einrichtung nicht oder nicht ausreichend erfassten Bewegung korrigierte Bewegungsdaten mit Hilfe von Bezugsmitteln (9) bestimmt, die wenigstens in einem vorgegebenen Raumwinkelbereich eindeutig zuordenbare Bildansichten aufweisen, indem die Rechnereinheit aus Daten von einem durch die Bilderfassungseinheit (11) aufgenommenen Ist-Bild der Bezugsmittel (9) im positionierten Zustand der bewegbaren Einrichtung (5) nach der nicht oder unzureichend erfassten Bewegung und Daten eines Bezugsbildes der Bezugsmittel (9), bei dem die bewegbare Einrichtung eine gewünschte Bewegung entsprechend von in der Rechnereinheit abgelegten Urbewegungsdaten ausführen würde, eine Transformationsvorschrift zur Korrektur der Urbewegungsdaten errechnet.

2. Vorrichtung nach Anspruch 1, **dadurch gekennzeichnet, dass** die Bilderfassungseinheit eine Kamera oder eine Videokamera (11) umfasst.

3. Vorrichtung nach Anspruch 1 oder 2, **dadurch gekennzeichnet, dass** die Rechnereinheit ein handelsüblicher PC ist.

4. Vorrichtung nach einem der vorhergehenden Ansprüche, **dadurch gekennzeichnet, dass** die Rechnereinheit dazu ausgelegt ist, die Transformationsvorschrift durch einen Pixel-Vergleich des Ist-Bildes mit dem Bezugsbild zu bestimmen.

5. Vorrichtung nach einem der vorhergehenden Ansprüche, **dadurch gekennzeichnet, dass** die Rechnereinheit zur Ermittlung einer Transformationsvorschrift in Form eines Verschiebungsvektors in einem dreidimensionalen Koordinatensystem sowie von Winkeldrehungen um die drei Koordinatenachsen ausgelegt ist, die das Koordinatensystem aufspannen.

6. Anordnung zur Ermittlung von korrigierten Bewegungsdaten für einen Bewegungsablauf einer bewegbaren Einrichtung (5) mit einer Vorrichtung nach einem der vorhergehenden Ansprüche sowie mit Bezugsmittel (9), die wenigstens in einem vorgegebenen Raumwinkelbereich eindeutig zuordenbare Bildansichten aufweisen.

7. Anordnung nach Anspruch 6, **dadurch gekennzeichnet, dass** die Bezugsmittel ein dreidimensionales Objekt mit Orientierungselementen oder dessen virtuelles Bild umfassen.

8. Anordnung nach Anspruch 6 oder 7, **dadurch gekennzeichnet, dass** die Bezugsmittel (9) an der bewegbaren Einrichtung (5) und die Bilderfassungseinheit (11) getrennt von der bewegbaren Einrichtung (5) angeordnet ist.

9. Anordnung nach einem der vorhergehenden Ansprüche 6 bis 8, **dadurch gekennzeichnet, dass** die
Bilderfassungseinheit (11) an der bewegbaren Einrichtung (5) und die Bezugsmittel (9) getrennt von der bewegbaren Einrichtung (5) angeordnet sind.

10. Bewegbare Einrichtung, insbesondere verfahrbare Roboter mit einem fahrerlosen Transportfahrzeug (3) und einem am Transportfahrzeug angebrachten Manipulator (4), **dadurch gekennzeichnet, dass** zur Ermittlung von korrigierten Bewegungsdaten für die bewegbare Einrichtung (5) nach einer von der Steuerung der bewegbaren Einrichtung nicht oder nicht ausreichend erfassten Bewegung eine Vorrichtung nach einem der Ansprüche 1 bis 5 vorgesehen ist.

11. Bewegbare Einrichtung nach Anspruch 10, **dadurch gekennzeichnet, dass** die Bezugsmittel (9) an der bewegbaren Einrichtung (5) angeordnet sind.

12. Bewegbare Einrichtung nach Anspruch 10 oder 11, **dadurch gekennzeichnet, dass** die Bilderfassungseinheit (11) an der bewegbaren Einrichtung (5) angeordnet ist.

13. System aus mehreren bewegbaren Einrichtungen, insbesondere verfahrbaren Robotern, gemäß einem der Ansprüche 10 bis 11 sowie mehreren Bezugsmittel (9) oder Bilderfassungseinheiten (11).
